Europäisches Patentamt

European Patent Office

Office européen des brevets

(11) Publication number: **0 150 893**
**B1**

# EUROPEAN PATENT SPECIFICATION

(45) Date of publication of patent specification: **31.05.89**

(51) Int. Cl.⁴: **F 16 H 7/12**

(21) Application number: **85300020.6**

(22) Date of filing: **02.01.85**

(54) Belt tensioning device.

(30) Priority: **31.01.84 GB 8402497**

(43) Date of publication of application:
**07.08.85 Bulletin 85/32**

(45) Publication of the grant of the patent:
**31.05.89 Bulletin 89/22**

(84) Designated Contracting States:
**DE FR IT**

(56) References cited:
**EP-A-0 030 169**
**EP-A-0 053 954**
**WO-A-83/02308**
**AT-B- 196 192**
**DE-A-2 839 721**
**DE-C- 531 441**
**FR-A- 358 308**
**FR-A- 762 827**
**FR-A-1 081 876**
**GB-A-1 175 951**
**US-A-3 817 113**

(73) Proprietor: **SKF (U.K.) LIMITED**
**Sundon Park Road**
**Luton Bedfordshire LU3 3BL (GB)**

(72) Inventor: **Clark, Paul Stewart**
**20 Truro Gardens**
**Luton Bedfordshire LU3 2AP (GB)**

(74) Representative: **McCulloch, Norman Little et al**
**Mathys & Squire 10 Fleet Street**
**London EC4Y 1AY (GB)**

Courier Press, Leamington Spa, England.

## Description

This invention relates to a device for tightening an endless belt on a machine, the device being of the kind comprising a member adapted for rolling or sliding engagement with the belt, the member being mounted on guide means permitting movement of the member along a path which intersects the belt, spring means operable to urge the member along said path and into engagement with the belt to tighten the belt, and setting means operable to hold the spring means in a pre-set stressed condition during movement of the member into engagement with the belt, the setting means being releasable when the member is engaged against the belt to enable the spring means to urge the member against the belt and thereby apply a load thereon. A device having these features as defined in the first part of claim 1 is known from EP—A—53954.

The term "endless belt" is used herein for convenience to denote any form of endless elongated strip member suitable for transmitting power, and includes endless bands and chains.

In the device of EP—A—53954, the member is supported on a pivot arm mounted directly on the machine frame and the spring means comprises a separate mechanism mounted on the machine frame. The setting means are only operable to hold the spring means in a stressed condition, and another separate mechanism must be used to compress the spring means.

The object of the present invention is to provide a device of the kind described above which is adapted to be fitted as a unit to a machine and which does not require separate mechanism for stressing the spring means.

According to the present invention there is provided a device of the kind described above, wherein the guide means, spring means and the setting means are all mounted on a base which is secured on the machine by means permitting adjustment of the base on the machine to engage the member against the belt to take up the slack thereof, the setting means are operable to move said member such to effect stressing of the spring means prior to said adjustment of the base, and the base is clamped to the machine prior to release of the setting means.

In a preferred construction of the device, the member is mounted on one end of an arm which is pivotably mounted intermediate its ends on the base, the said member is mounted on one end of the arm and the spring means are connected between the other end of the arm and an anchorage on the base.

The setting means may comprise a setting screw mounted in a screw threaded aperture in a part of the base and arranged to engage against the arm, and the base may be provided with an indicator mark which is aligned with the arm when the arm is in a position in which the spring means is stressed to a predetermined load.

The construction of the member will of course depend on the type and form of the endless belt.

In a device suitable for tensioning a belt having a smooth outer surface the member can conveniently comprise a double-row deep-groove ball bearing fitted with a tyre on the outer bearing ring, and in a device suitable for tensioning a chain the member can conveniently comprise a rotatable sprocket. Alternatively, the member may comprise a shoe adapted to make sliding contact with the chain.

The device of the invention, when in use for tightening an endless belt on a machine, can readily be disengaged from the belt when the device is to be removed from the machine by operating the setting means so as to take up the stress on the spring means and thereby permit the member to be moved along its fixed path away from the belt.

The device of the invention also has the advantage that it can be mechanically controlled during dismounting and remounting of the belt without slackening the means securing the base of the device to the machine. Thus, when a belt is to be dismounted, the setting means are operated to stress the spring means and thereby disengage the device from the belt. The belt can then easily be removed and replaced by a new belt, whereupon the setting means are released to cause the spring means to urge the member against the belt.

One construction of a belt tightening device according to the invention will now be described, by way of example, with reference to the accompanying drawings, in which

Figure 1 is a front elevation of the device when in use holding taut a belt for driving auxiliaries of an internal combustion engine, and

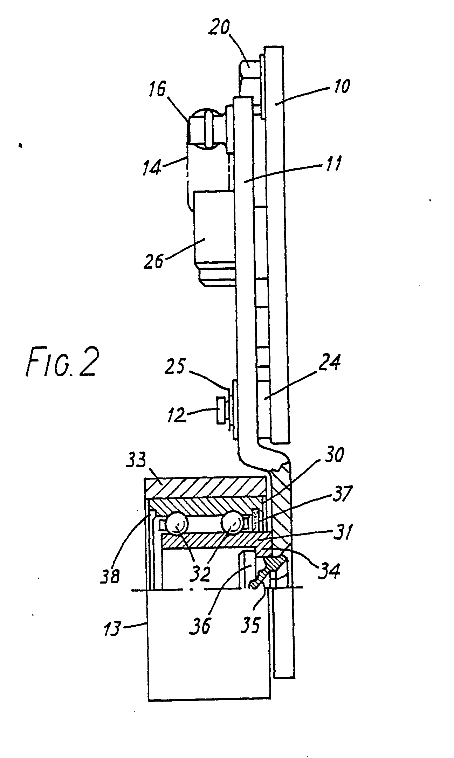

Figure 2 is a side elevation of the device shown partly in section.

The device shown in the drawings comprises an elongated base plate (base) 10, a tension arm (guide means) 11 pivotally mounted intermediate its ends on a pivot pin 12 on the base plate, a tension roller (member) 13 rotatably mounted on one end of the arm 11, a coil spring 14 having one end anchored on a pin 15 on the base plate and the other end attached to a pin 16 on the other end of the arm 11, and a tension setting screw (setting means) 17 mounted on a lug 18 on the base plate.

The base plate has an aperture at one end thereof for reception of a clamp screw 20, and an arcuate slot 21 adjacent the other end thereof for reception of another clamp screw 22, the arcuate slot 21 having a radius which is centered on the aperture for the clamp screw 20. The pin 15 for anchoring one end of the spring is secured in an aperture in the base plate adjacent the aperture for the clamp screw 20, and the pivot pin 12 is secured in an aperture in the other end of the base plate. The centre portion of the base plate has a rectangular section cut along three sides thereof and folded along the fourth side at right angles to the general plane of the base plate to form the lug 18. The lug has a screw threaded aperture for reception of the setting screw 17.

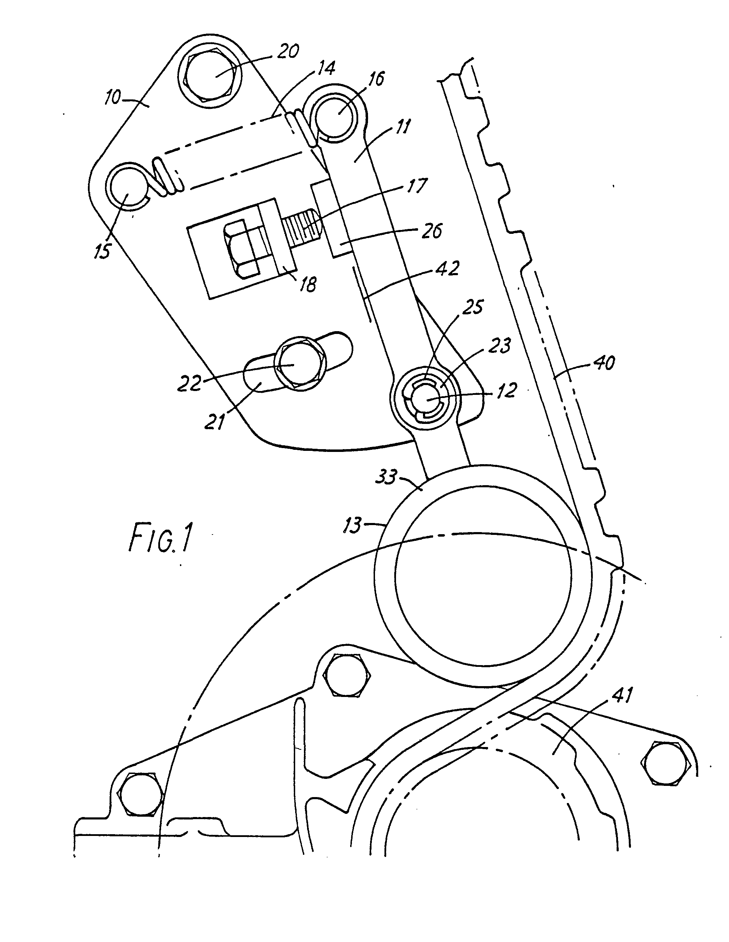

The tension arm 11 is formed with an aperture intermediate its ends for reception of a bush 23 which receives the pivot pin 12, the bush 23 having a collar 24 between the arm 11 and the base plate, and the tension arm 11 is held in position on the pin 12 by a spring retaining ring 25 engaged in a groove in the pin adjacent the end thereof. The pin 16 for attaching an end of the coil spring to the arm 11 is secured in an aperture in the end of the arm. The end portion of the arm 11 fitted with the roller 13 projects beyond the adjacent end of the base plate and is cranked inwardly so as to lie approximately in the general plane of the base plate. A small abutment plate 26 similar in size to the lug 18 is welded to the part of the arm 11 opposite the lug 18. The lug 18 and the plate 26 are arranged so that they are substantially parallel to one another when the tension arm 11 is in its operative position shown in Figure 1, so that the plate 26 can form an abutment for the tension setting screw 17 on the lug 18.

The tension roller 13 comprises an outer bearing ring 30 rotatably mounted on an inner bearing ring 31 by two rows of balls 32 disposed between the two bearing rings and in rolling engagement with grooved tracks on the two bearing rings, and a cylindrical tyre 33 is secured on the outer bearing ring 30. The end of the inner bearing ring adjacent the arm 11 projects out of the outer bearing ring and is formed with an inwardly projecting annular flange 34. The tension roller 13 is mounted on the arm 11 by a shouldered pin 35 which is riveted into a flared aperture in the arm 11, the pin 35 having a head 36 which engages the flange 34 and retains the end of the inner bearing ring against the arm 11. The annular space between the two bearing rings is sealed at the inner end adjacent the arm 11 by an annular seal 37 which is located in a groove in the outer bearing ring and is in sliding engagement with the inner bearing ring. The outer end of the roller 13 is sealed by an end cap (not shown) which is a press fit in a groove 38 in the outer end of the outer bearing ring.

Figure 1 shows the belt tightening device mounted on an outer casing of an engine of a motor vehicle and holding taut an endless belt 40 extending around a pulley 41 drivably connected to a crankshaft of the engine, the belt driving a camshaft and water pump (not shown). The base plate 10 of the device is clamped against a flat surface on the engine casing by the clamp screws 20, 22 which are screwed into screw threaded apertures in the engine casing.

Before the belt tightening device is attached to the engine casing, the tension setting screw 17 is screwed into the lug 18 and against the abutment plate 26 so as to pivot the tension arm 11 about the pivot pin 12 in the clockwise direction relative to the base plate as shown in Figure 1, and thereby stress the coil spring 14 to a determined tension. The base plate can conveniently be provided with an indicator mark 42 which is uncovered by the arm 11 when the spring is loaded to the required tension. The device is then mounted on the engine casing by the clamp screws 20, 22 which are not fully tightened at this stage. The device is then pivoted manually about the clamp screw 20 to engage the roller 13 against the belt 40 and take up excess slack in the belt. The clamp screws 20, 22 are then fully tightened and the setting screw 17 unscrewed out of contact with the abutment plate 26 so that the tension roller 13 is urged by the spring 14 against the belt.

The belt tightening device can readily be removed from the machine by screwing the tension setting screw 17 against the abutment plate 26 so as to take up the load exerted on the arm by the spring. There will then be little or no load on the belt, and the clamp screws 20, 22 can be loosened to enable the device to be pivoted in the clockwise direction about the clamp screw 20 and thereby swing the roller 13 away from the belt.

The belt can readily be removed from the engine without slackening the clamp screws 20, 22 by screwing the tension setting screw 17 against the abutment plate 26 so as to swing the arm 11 clockwise about the pivot pin 12, against the action of the coil spring 14, and thereby swing the roller 13 away from the belt. The belt can then be replaced by a new belt, and the tension setting screw 17 unscrewed out of engagement with the abutment plate 26. If the new belt is slightly different in length from the previous belt, it will be necessary to loosen the clamp screws 20, 22 while the setting screw 17 is engaged against the abutment plate 26, swing the whole device about the clamp screw 20 to move the roller 13 clear of the belt, re-adjust the tension setting screw 17 to stress the coil spring to the desired load, swing the device back to engage the roller 13 against the belt and take up the excess slack, retighten the clamp screws 20, 22, and finally unscrew the setting screw 17 out of engagement with the abutment plate 26.

## Claims

1. A device for tightening an endless belt on a machine, the device comprising a member (13) adapted for rolling or sliding engagement with the belt (40), said member (13) being mounted on guide means (11) permitting movement of the member along a path which intersects the belt, spring means (14) operable to urge said member along said path and into engagement with the belt to tighten the belt, and setting means (17) operable to hold the spring means (14) in a preset stressed condition during movement of the member into engagement with the belt, the setting means being releasable when the member is engaged against the belt to enable the spring means to urge the member against the belt and thereby apply a load thereon, characterised in that the guide means (11), the spring means (14), and the setting means (17) are all mounted on a base (10) which is secured on the machine by means (20—22) permitting adjustment of the base on the machine to engage said member against the belt to take up the slack thereof, the setting means (17) are operable to move said member such to effect stressing of the spring means (14) prior to said adjustment of the base, and the base is clamped to the machine prior to release of the setting means (17).

2. A device as claimed in claim 1, wherein the said member (13) is mounted on an arm (11) pivotably mounted on the base, characterised in that the arm (11) is pivotably mounted intermediate its ends on the base, the said member (13) is mounted on one end of the arm and the spring means (14) are connected between the other end of the arm and an anchorage (15) on the base.

3. A device as claimed in claim 2, wherein the setting means comprises a setting screw (17) mounted in a screw threaded aperture in a part (18) of the base and arranged to engage against the arm (11).

4. A device as claimed in any of claims 2—3, wherein the base is provided with an indicator mark (42) which is aligned with the arm (11) when the arm is in a position in which the spring means (14) is stressed to a predetermined load.

5. A device as claimed in any of claims 1—4, wherein the means for securing the base on the machine comprises a clamp screw (20) engaged in an aperture in the base and a further clamp screw (22) engaged in an arcuate slot (21) in the base, the arcuate slot (21) having a radius which is centered on said aperture.

6. A device as claimed in any of claims 1—5, wherein said member (13) comprises a double-row deep-groove ball bearing fitted with a tyre (33) on the outer bearing ring (30).

**Patentansprüche**

1. Vorrichtung zum Spannen eines endlosen Riemens an einer Maschine, die Vorrichtung enthaltend ein Element (13), das zur abrollenden oder gleitenden Anlage an dem Riemen (40) eingerichtet ist und das an Führungseinrichtungen (11) montiert ist, die eine Bewegung des Elements länges eines Weges erlauben, der den Riemen schneidet, eine Federeinrichtung (14), die dazu eingerichtet ist, das genannte Element längs des genannten Weges und in Anlage an den Riemen zu drücken, um den Riemen zu spannen, und eine Einstelleinrichtung (17), die dazu eingerichtet ist, die Federeinrichtung (14) in einem voreingestellten, gespannten Zustand während der Bewegung des Elements in Anlage an den Riemen zu halten, welche Einstelleinrichtung auslösbar ist, wenn das Element an dem Riemen in Anlage ist, um es der Federeinrichtung zu ermöglichen, das Element gegen den Riemen zu drücken und dadurch auf inhn eine Last aufzubringen, dadurch gekennzeichnet, daß die Führungseinrichtungen (11), die Federeinrichtung (14) und die Einstelleinrichtung (17) sämtlich auf einem Grundkörper (10) montiert sind, der an der Maschine durch Einrichtungen (20—22) befestigt ist, die eine Einrichtung des Grundkörpers an der Maschine erlauben, um das genannte Element an dem Riemen in Anlage zu bringen und den Durchhang desselben aufzunehmen, daß die Einstelleinrichtung (17) dazu eingerichtet ist, das genannte Element derart zu bewegen, daß eine Spannung der Federeinrichtung (14) vor der Einstellung des Grundkörpers bewirkt wird, und der Grundkörper an der Maschine vor dem Freigeben der Einstelleinrichtung (17) festgespannt wird.

2. Vorrichtung nach Anspruch 1, bei der das genannte Element (13) an einem Arm (11) befestigt ist, der an dem Grundkörper schwenkbar montiert ist, dadurch gekennzeichnet, daß der Arm (11) zwischen seinen Enden an dem Grundkörper schwenkbar montiert ist, das Element (13) an dem einem Ende des Arms befestigt ist und die Federeinrichtung (14) zwischen dem anderen Ende des Arms und einer Verankerung (14) an dem Grundkörper angeschlossen ist.

3. Vorrichtung nach Anspruch 2, bei der die Einstelleinrichtung eine Einstellschraube (17) enthält, die in eine Schraubgewindeöffnung in einem Teil (18) des Grundkörpers befestigt und dazu eingerichtet ist, gegen den Arm (11) zu drücken.

4. Vorrichtung nach einem der Ansprüche 2 und 3, bei der der Grundkörper mit einer Anzeigemarkierung (42) versehen ist, die auf den Arm (11) ausgerichtet ist, wenn sich der Arm in einer Position befindet, in der die Federeinrichtung (14) mit einer vorbestimmten Last belastet ist.

5. Vorrichtung nach einem der Ansprüche 1 bis 4, bei der die Einrichtung zum Befestigen des Grundkörpers an der Maschine eine Klemmschraube (20) aufweist, die in einer Öffnung im Grundkörper sitzt, und weiterhin eine Klemmschraube (22) aufweist, die in einem bogenförmigen Schlitz (21) in dem Grundkörper sitzt, wobei der bogenförmige Schlitz (21) einen Radius aufweist, der auf die genannte Öffnung zentriert ist.

6. Vorrichtung nach einem der Ansprüche 1 bis 5, bei der das genannte Element (13) ein doppelreihiges Ziehriefen-Kugellager enthält, das mit einem Reifen (33) auf dem äußeren Lagerring (30) versehen ist.

**Revendications**

1. Dispositif de tension d'une courroie sans fin sur une machine, le disposit comprenant un organe (13) prévu pour un contact de roulement ou de glissement avec la courroie (40), ledit organe (13) étant monté sur des moyens de guidage (11) qui permettent le mouvement de l'organe le long d'une trajectoire qui rencontre la courroie, des moyens élastiques (14) agissant de manière à solliciter ledit organe le long de ladite trajectoire et à l'appliquer en contact avec la courroie pour tendre la courroie, et des moyens de réglage (17) qui agissent de manière à maintenir les moyens élastiques (14) dans un état de tension prédéterminé pendant la mouvement de mise en contact de l'organe avec la courroie, les moyens de réglage étant libérables lorsque l'organe est en contact contre la courroie de manière à ce que les moyens élastiques puissent presser l'organe contre la courroie et appliquer ainsi une charge sur celle-ci, caractérisé en ce que les moyens de guidage (11) les moyens élastiques (14) et les moyens de réglage (17) sont tous montés sur une base (10) qui est fixée sur la machine par des moyens (20—22) permettant un réglage de la base sur la machine de manière à amener ledit organe en contact contre la courroie pour reprendre le mou de celle-ci, les moyens de réglage (17) sont actionnables de manière à deplacer le dit organe de façon à effectuer la mise en tension des moyens élastiques (14) avant ledit réglage de la base, et la base est bloquée sur la machine avant de relâcher les moyens de réglage (17).

2. Dispositif suivant la revendication 1, dans lequel ledit organe (13) est monté sur un bras (11) monté de façon pivotante sur la base, caractérisé en ce que le bras (11) est monté de façon pivotante entre ses extrémités sur la base, ledit organe (13) est monté sur une extrémite du bras et les moyens élastiques (14) sont connectés entre l'autre extrémité du bras et un ancrage (15) sur la base.

3. Dispositif suivant la revendication 2, dans lequel les moyens de réglage comprennent une vis de réglage (17) montée dans un trou taraudé prévu dans une partie (18) de la base et agencée de manière à venir en contact contre le bras (11).

4. Dispositif suivant l'une des revendications 2—3, dans lequel la base comporte une marque indicatrice (42) qui est alignée avec le bras (11) lorsque le bras est dans une position dans laquelle les moyens élastiques (14) sont tendus à une charge prédéterminée.

5. Dispositif suivant l'une quelconque des revendications 1 à 4, dans lequel les moyens de fixation de la base sur la machine comprennent une vis de blocage (20), engagée dans un trou de la base, et une autre vis de blocàge (22) engagée dans une lumière courbe (21) prévue dans la base, la lumière courbe (21) ayant un rayon qui est centré sur ledit trou.

6. Dispositif suivant l'une quelconque des revendications 1 à 5, dans lequel ledit organe (13) comprend un palier à billes à gorge profonde à double rangée de billes, pourvu d'un bandage en caoutchouc (33) sur la bague extérieure (30) du roulement.

FIG.1

FIG. 2